# EUROPÄISCHE PATENTSCHRIFT

(11) **EP 1 291 236 B1**
(45) Veröffentlichungstag und Bekanntmachung des Hinweises auf die Patenterteilung: **13.12.2006**
(21) Anmeldenummer: 02018980.9
(22) Anmeldetag: 27.08.2002
(51) Int. Cl.: B60N 2/235, B60N 2/20, B60N 2/22

(54) **Entriegelungsvorrichtung in einem Fahrzeugsitz**
Unlocking device for vehicle seats
Dispositif de déverrouillage pour sièges de véhicules

(30) Priorität: 05.09.2001 DE 10143403
(43) Veröffentlichungstag der Anmeldung: 12.03.2003
(73) Patentinhaber: KEIPER GmbH & Co. KG, 67657 Kaiserslautern (DE)
(72) Erfinder: Klein, Mario, 78176 Blumberg (DE); Nock, Eckhard, 67551 Worms (DE); Hänsel, Richard, 55237 Flonheim (DE); Kraus, Martin, 67806 Katzenbach (DE)
(74) Vertreter: Patentanwälte Hosenthien-Held und Dr. Held

(56) Entgegenhaltungen:
- DE-A- 4 439 644
- DE-A- 10 053 414
- DE-C- 3 828 223
- DE-C- 19 604 672
- US-A- 3 299 466

## Beschreibung

Die Erfindung betrifft einen Fahrzeugsitz mit den Merkmalen des Oberbegriffs des Anspruches 1.

Es ist bei Fahrzeugsitzen bekannt, für Klinkenverriegelungen, wie sie in Einstellem oder in Sitzbefestigungen verwendet werden, eine Entriegelungsvorrichtung zu benutzen, um verschiedene Sicherungselemente von der Klinke zurückzuziehen, damit diese öffnen kann. Beispielsweise in einem Beschlag für eine freischwenkbare Lehne mit Spann- und Fangelementen zur Sicherung einer verriegelnden Sperrklinke, wie er in der DE 44 39 644 C2 offenbart ist, erfolgt ein Entriegeln durch einen am Fangelement angreifenden Bowdenzug, wobei der Bowdenzug in der Regel an einem fangelementfesten Entriegelungsbolzen angebracht ist, welcher durch eine Kulisse aus dem Beschlag herausragt. Je nach angreifendem Drehmoment und vorhandenem Spiel kann die Bewegung des Entriegelungsbolzens quer zu seiner Längsachse schwergängig werden.

Aus der US 3,299,466 A ist ein Lehnenneigungseinsteller für einen Fahrzeugsitz der eingangs genannten Art bekannt, dessen hebelartiges Entriegelungselement im Inneren des Einstellers schwenkbar gelagert ist und mit einem als Griff ausgebildeten Arm aus dem Gehäuse des Einstellers herausragt.

Der Erfindung liegt die Aufgabe zu Grunde, eine Entriegelungsvorrichtung der eingangs genannten Art zu verbessern. Diese Aufgabe wird erfindungsgemäß durch eine Entriegelungsvorrichtung mit den Merkmalen des Anspruches 1 gelöst. Vorteilhafte Ausgestaltungen sind Gegenstand der Unteransprüche.

Dadurch, dass das Entriegelungselement an einem auf der Außenseite des Einstellers oder der Sitzbefestigung angeordneten, schwenkbar gelagerten Mitnehmer angebracht ist, beispielsweise an einem Arm desselben, wird eine leichtgängige Betätigungsbewegung des Entriegelungselementes erreicht, ohne dass die Gefahr eines Verkantens, insbesondere innerhalb des Einstellers, besteht, wie sie im Stand der Technik gegeben ist, gemäß dem das Entriegelungselement innen im Einsteller oder in der Sitzbefestigung angeordnet ist, beispielsweise an einem dünnen Sicherungselement einseitig abstehend angebracht ist.

Die Anbringung der Entriegelungsvorrichtung auf der Außenseite vermeidet Beschädigungen des Entriegelungselementes beim Transport. Ferner kann sowohl die Anordnung der Entriegelungsvorrichtung auf den verschiedenen Seiten eines Einstellers als auch der Anschluss von Betätigungselementen an die vorgegebenen Anforderungen angepasst erfolgen, ohne dass der vorhandene Einsteller oder die Sitzbefestigung intern geändert werden muss.

Je nach Anforderungen, insbesondere bei mehreren Betätigungsmöglichkeiten und beim Einsatz der gleichen Entriegelungsvorrichtung in verschiedenen Fahrzeugsitzen, weist der Mitnehmer vorzugsweise eine entsprechende Anzahl von Armen für das Entriegelungselement und das oder die Betätigungselemente auf. Der Mitnehmer kann dabei als Lochscheibe oder als Satz von mehren verschiedenarmigen Mitnehmern gewählt werden.

Die Lagerung der Entriegelungsvorrichtung erfolgt vorzugsweise in einer Lagerbuchse des Einstellers oder der Sitzbefestigung, welche vorzugsweise zugleich der Lagerung eines oder mehrerer, vom Entriegelungselement zu bewegenden Sicherungselemente dient, damit eine synchrone Schwenkbewegung durchgeführt werden kann. Mit größerem Durchmesser der Lagerbuchse und des Lagerbolzens oder der Lagerhülse der Entriegelungsvorrichtung wird eine bessere Leichtgängigkeit erreicht. Die axiale Sicherung des Lagerbolzens oder der Lagerhülse kann durch offene Sprengringe, Federringe mit verschiedensten Querschnittsprofilen und Ausbildungen, Clipverbindungen oder dergleichen erfolgen. Bevorzugt sind solche axiale Sicherungen, auf die im Gebrauchsfall keine öffnenden Kräfte und Momente wirken.

Die vorzugsweise manuell betätigbare Entriegelungsvorrichtung kann für verschiedene verriegelbare Einrichtungen, wie beispielsweise Einsteller oder lösbare Sitzbefestigungen in den Sitzfüßen bei hinteren Sitzreihen, eingesetzt werden, insbesondere bei solchen, deren Entriegelungsvorgang mit einer Schwenkbewegung eines Sicherungselementes eingeleitet wird.

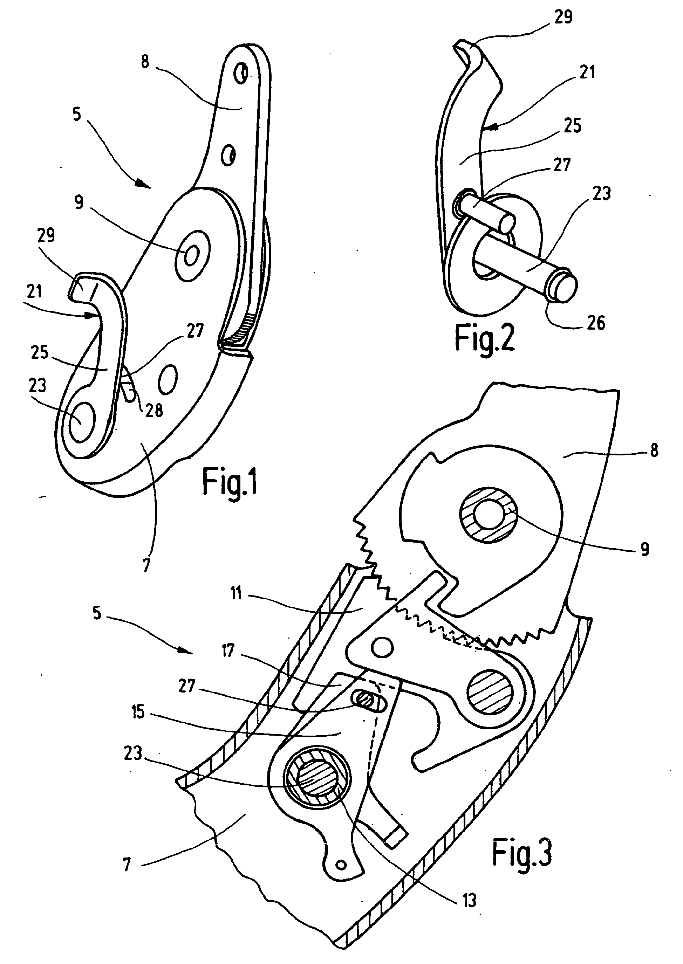

Im folgenden ist die Erfindung anhand dreier in der Zeichnung dargestellten Ausführungsbeispiele näher erläutert. Es zeigen
- Fig. 1: eine perspektivische Ansicht eines Einstellers mit einer Entriegelungsvorrichtung gemäß dem ersten Ausführungsbeispiel,
- Fig. 2: eine weitere perspektivische Ansicht der Entriegelungsvorrichtung von Fig. 1,
- Fig. 3: einen Längsschnitt durch den Einsteller von Fig. 1,

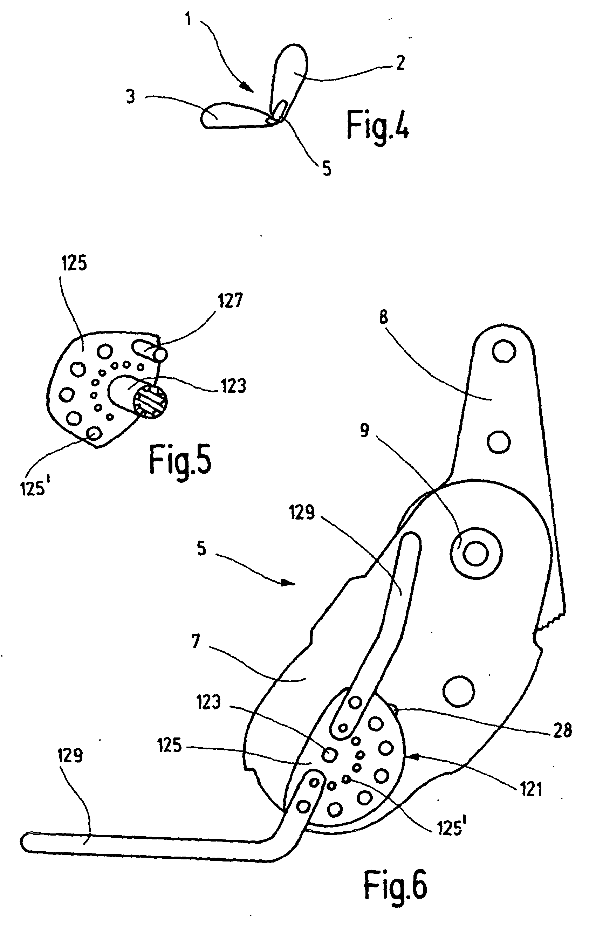

- Fig. 4: eine schematische Ansicht eines Fahrzeugsitzes,
- Fig. 5: eine perspektivische Ansicht von Teilen einer Entriegelungsvorrichtung gemäß einem zweiten Ausführungsbeispiel,
- Fig. 6: eine Seitenansicht eines Einstellers mit der Entriegelungsvorrichtung aus Fig. 5,

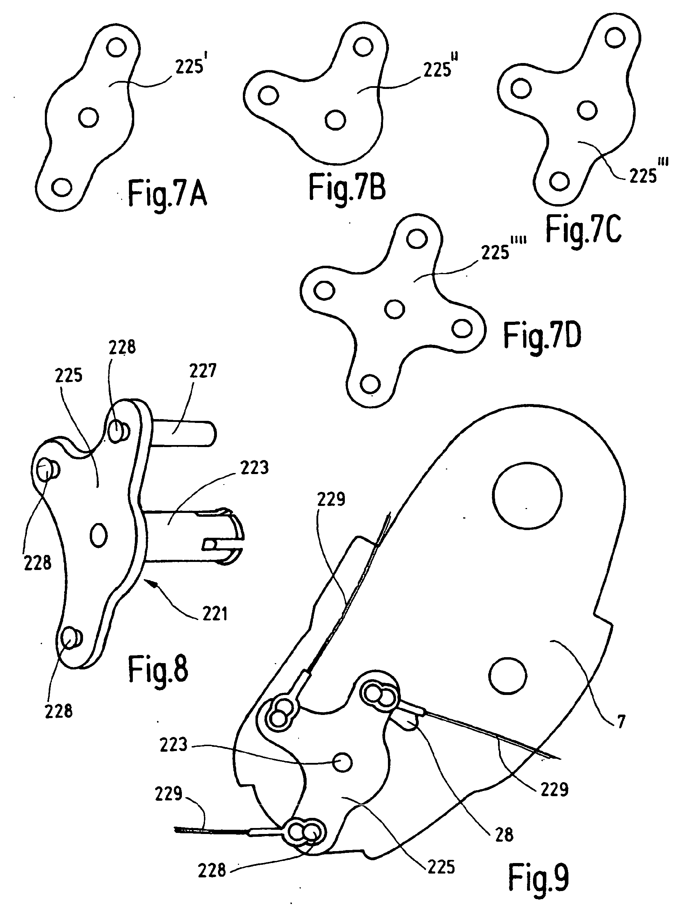

- Fig. 7A bis 7D: Ansichten verschiedener Mitnehmer,
- Fig. 8: eine perspektivische Ansicht von Teilen einer Entriegelungsvorrichtung gemäß einem dritten Ausführungsbeispiel, und
- Fig. 9: eine Seitenansicht eines Einstellers mit der Entriegelungsvorrichtung aus Fig. 8.

Ein Fahrzeugsitz 1, welcher als wickelbarer Rücksitz eines Kraftfahrzeuges ausgebildet ist, weist zur Neigungseinstellung seiner Rückenlehne 2 relativ zu seinem Sitzteil 3 auf beiden Seiten einen Einsteller 5 auf. Der als Rastbeschlag ausgebildete Einsteller 5 umfaßt ein sitzteilfestes Beschlagunterteil 7 und ein lehnenfestes Beschlagoberteil 8, welches mittels eines im Beschlagunterteil 7 gelagerten Lehnenbolzens 9 schwenkbar ist. Das Beschlagunterteil 7 besteht dabei aus zwei plattenförmigen, parallel angeordneten Elementen, welche einen Bauraum zur Aufnahme des den Lehnenbolzen 9 umschließenden Bereichs des Beschlagoberteils 8 und verschiedener Verriegelungs- und Sicherungselemente definieren.

Eine nicht näher dargestellte, am Beschlagunterteil 7 gelagerte Sperrklinke 11 wirkt mit einer Verzahnung des Beschlagoberteils 8 zusammen, um den Einsteller 5 zu verriegeln. Die Sperrklinke 11 wird in an sich bekannter Weise durch ein auf einer Lagerbuchse 13 gelagertes, federbelastetes, über einen Steuernocken auf die Sperrklinke 11 wirkendes Spannelement 15 im Normalgebrauch gesichert. Die Lagerbuchse 13 ist an beiden Enden bis zu den Außenseiten des Beschlagunterteils 7 geführt und durch einen Flansch bzw. Nietkopf in axialer Richtung gesichert. Ein ebenfalls auf der Lagerbuchse 13 gelagertes, federbelastetes Fangelement 17 stützt im Crashfall mit einer flachen Anlagefläche die Sperrklinke 11 ab, um den Zahneingriff aufrecht zu erhalten.

Die Entriegelungsvorrichtung 21 des ersten Ausführungsbeispiels weist einen Lagerbolzen 23 auf, welcher von außen her in die Lagerbuchse 13 gesteckt und in dieser gelagert ist. Am Lagerbolzen 23 ist an einem Ende ein armförmiger Mitnehmer 25 angebracht und am anderen Ende ein offener Sicherungsring 26 zur axialen Sicherung aufgesteckt und teilweise innerhalb einer Ringnut des Lagerbolzens 23 angeordnet. Zur Vermeidung seitlicher Ausweichbewegungen bei Belastungen kann ein solcher, aus Federstahl bestehender Sicherungsring 26 einen quadratischen Materialquerschnitt aufweisen. Der Sicherungsring 26 kann auch als ovale Ringfeder ausgebildet sein, welche nur durch Radialkräfte beim Einschieben, nicht aber durch Axialkräfte zusammendrückbar ist.

Von dem auf der Außenseite des Beschlagunterteils 7 angeordneten Mitnehmer 25 steht parallel zum Lagerbolzen 23 als Entriegelungselement ein angeschweißter Entriegelungsbolzen 27 ab, welcher durch eine Kulisse 28 des Beschlagunterteils 7 greift und fest in einer Öffnung des Fangelementes 17 sitzt. Der Entriegelungsbolzen 27 bildet zugleich einen Teil einer Schlitz-Zapfen-Führung zur Kopplung von Fangelement 17 und Spannelement 15. In einem bezüglich des Abstandes zwischen Lagerbolzen 23 und Entriegelungsbolzens 27 größeren Abstand zum Lagerbolzen 23 ist am Mitnehmer 25 ein Betätigungsfinger 29 angeformt, welcher mit einem Handgriff versehen sein kann. Mit einer Hand kann so die Betätigungskraft auf das Fangelement 17 übertragen werden.

Durch Schwenken des Mitnehmers 25 der Entriegelungsvorrichtung 21 um die durch die Lagerbuchse 13 und den Lagerbolzen 23 definierten Schwenkachse bewegt der Entriegelungsbolzen 27 das Fangelement 17 und nimmt das Spannelement 15 mit, das wiederum die Sperrklinke 11 freigibt, so daß der Einsteller 5 entriegelt ist. Nach Freigabe des Mitnehmers 25 erfolgt ein Verriegeln aufgrund der Federbelastungen der beteiligten Bauteile.

Die Entriegelungsvorrichtung 121 des zweiten Ausführungsbeispiels, welche den gleichen Einsteller 5 in gleicher Weise wie im ersten Ausführungsbeispiel über das Fangelement 17 entriegelt, weist auf einer in die Lagerbuchse 13 gesteckten Lagerhülse 123 einen scheibenförmigen Mitnehmer 125 mit mehreren Öffnungen 125' auf. Die Lagerhülse 123 ist zur drehfesten Aufnahme einer nicht dargestellten Übertragungsstange zum Einsteller 5 auf der anderen Fahrzeugsitzseite ausgebildet. Das erste Ausführungsbeispiel kann in abgewandelter Ausführung eine entsprechende Lagerhülse aufweisen. Die axiale Sicherung des Mitnehmers 125 erfolgt beispielsweise durch eine Ausbildung der Lagerhülse 123 als Spreizdübel oder durch einen Sicherungsring wie im ersten Ausführungsbeispiel.

In eine der Öffnungen 125' ist ein Entriegelungsbolzen 127 eingepreßt, welcher funktionell und in seiner Ausbildung und Orientierung demjenigen des ersten Ausführungsbeispiels gleicht. Mittels zweier Öffnungen 125' sind am Mitnehmer 125 jeweils zwei Betätigungshebel 129 drehfest angebracht, welche eine Betätigung der Entriegelungsvorrichtung 121 aus zwei verschiedenen Richtungen ermöglichen. Der Winkel zwischen den Wirkrichtungen der Betätigungshebel 129 ist je nach Anforderung wählbar. In einer abgewandelten Ausführungsform hierzu ist die Übertragungsstange versetzt zur Lagerbuchse 13 an einem der Betätigungshebel 129 angebracht.

In einem dritten Ausführungsbeispiel weist die Entriegelungsvorrichtung 221, welche den Einsteller 5 in gleicher Weise wie im ersten Ausführungsbeispiel über das Fangelement 17 entriegelt, an einer Lagerhülse 223 einen Mitnehmer 225 auf. Der Mitnehmer 225 ist in modularer Weise aus einem Satz von verschiedenen zweiarmigen, dreiarmigen oder vierarmigen Mitnehmern 225', 225", 225"' bzw. 225"" auswählbar. An einem Arm des Mitnehmers 225 ist ein Entriegelungsbolzen 227 angebracht, welcher funktionell und in seiner Ausbildung und Orientierung demjenigen des ersten Ausführungsbeispiels gleicht.

Am gleichen Arm und/oder an den weiteren Armen des Mitnehmers 225 ist jeweils ein ausgestellter Nocken 228 vorgesehen, an welchem mittels einer Öse jeweils ein Betätigungszug 229 eingehängt ist, beispielsweise die Seele eines Bowdenzuges. Mittels dieser Betätigungszüge 229 kann der Mitnehmer 225 von der Lehnenoberkante, von vorne und/oder vom Kofferraum aus gedreht, also die Entriegelungsvorrichtung 221 betätigt, und damit der Einsteller 5 entriegelt werden. Anstelle der Nocken 228 können auch Bohrungen zur Anbringung der Betätigungszüge 229 vorgesehen sein. Anstelle der Betätigungszüge ist auch ein Gestänge anbringbar. Ein von 90° abweichender Winkel zwischen den Armen des Mitnehmers 225, d.h. beispielsweise 75°, kann je nach Geometrie und Wirkrichtungen der Betätigungszüge 229 eine bessere Krafteinleitung bewirken.

Die Lagerhülse 223 dient wie im zweiten Ausführungsbeispiel zur drehfesten Aufnahme einer Übertragungsstange. Für eine axiale Sicherung des vorzugsweise als Zink-Druckguß-Teil hergestellten Mitnehmers 225 ist die Lagerhülse 223 auf der vom Mitnehmer 225 abgewandten Seite geschlitzt und als Clip mit mehreren elastischen Zungen oder Nasen ausgebildet, die sich an der eine Hinterschneidung bildenden Lagerbuchse 13 verhaken können. Die Lagerhülse 223 kann aber auch wie im ersten Ausführungsbeispiel durch einen Sicherungsring auf der vom Mitnehmer 225 abgewandten Seite gesichert sein.

### Bezugszeichenliste

- 1: Fahrzeugsitz
- 2: Rückenlehne
- 3: Sitzteil
- 5: Einsteller
- 7: Beschlagunterteil
- 8: Beschlagoberteil
- 9: Lehnenbolzen
- 11: Sperrklinke
- 13: Lagerbuchse
- 15: Spannelement
- 17: Fangelement
- 21, 121, 221: Entriegelungsvorrichtung
- 23: Lagerbolzen
- 25, 125, 225, 225', 225", 225''', 225'''': Mitnehmer
- 26: Sicherungsring
- 27, 127, 227: Entriegelungsbolzen, Entriegelungselement
- 28: Kulisse
- 29: Betätigungsfinger, Betätigungselement
- 123, 223: Lagerhülse
- 125': Öffnung
- 129: Betätigungshebel, Betätigungselement
- 228: Nocken
- 229: Betätigungszug, Betätigungselement

## Patentansprüche

1. Fahrzeugsitz, insbesondere Kraftfahrzeugsitz, mit einem Einsteller (5) und/oder einer Sitzbefestigung und mit einer Entriegelungsvorrichtung (21; 121; 221), mittels welcher der Einsteller (5) oder die Sitzbefestigung entriegelbar ist und welche ein in den Einsteller (5) oder die Sitzbefestigung greifendes Entriegelungselement (27; 127; 227) aufweist, **dadurch gekennzeichnet, dass** das Entriegelungselement (27; 127; 227) an einem auf der Außenseite des Einstellers (5) oder der Sitzbefestigung angeordneten, schwenkbar gelagerten Mitnehmer (25; 125; 225) angebracht ist.

2. Fahrzeugsitz nach Anspruch 1, **dadurch gekennzeichnet, dass** der Mitnehmer (25) einen einzelnen Arm mit dem Entriegelungselement (27) und mit einem Betätigungsfinger (29) aufweist.

3. Fahrzeugsitz nach Anspruch 1, **dadurch gekennzeichnet, dass** der Mitnehmer (125) als Scheibe mit mehreren Anbringungsmöglichkeiten für Betätigungselemente (129) und/oder das Entriegelungselement (127) ausgebildet ist.

4. Fahrzeugsitz nach Anspruch 1, **dadurch gekennzeichnet, dass** der Mitnehmer (225) aus einem Satz von Mitnehmern (225', 225", 225"', 225"") mit mehreren Armen zur Anbringung von Betätigungselementen (229) auswählbar ist.

5. Fahrzeugsitz nach Anspruch 3 oder 4, **dadurch gekennzeichnet, dass** der Mitnehmer (125; 225) für verschieden wählbare Winkel zwischen den Wirkrichtungen der Betätigungselemente (129; 229) ausgebildet ist.

6. Fahrzeugsitz nach einem der Ansprüche 1 bis 5, **dadurch gekennzeichnet, dass** die Entriegelungsvorrichtung (21; 121; 221) manuell betätigbar ist.

7. Fahrzeugsitz nach einem der Ansprüche 1 bis 6, **dadurch gekennzeichnet, dass** zur Lagerung des Mitnehmers (25) ein Lagerbolzen (23) am Mitnehmer (25) vorgesehen ist, wobei der Lagerbolzen (23) durch einen kreisringförmigen oder ovalen Sicherungsring (26) axial gesichert ist.

8. Fahrzeugsitz nach einem der Ansprüche 1 bis 6, **dadurch gekennzeichnet, dass** zur Lagerung des Mitnehmers (125; 225) eine Lagerhülse (123; 223) am Mitnehmer (125; 225) vorgesehen ist, welche durch eine Clipverbindung axial gesichert ist.

9. Fahrzeugsitz nach einem der Ansprüche 1 bis 8, **dadurch gekennzeichnet, dass** der Mitnehmer (25; 125; 225) in einer Lagerbuchse (13) des Einstellers (5) oder der Sitzbefestigung gelagert ist, welche vorzugsweise zugleich der Lagerung eines oder mehrerer, vom Entriegelungselement (27; 127; 227) zu bewegenden Sicherungselemente (17) dient.

10. Fahrzeugsitz nach Anspruch 9, **dadurch gekennzeichnet, dass** das Entriegelungselement (27; 127; 227) durch eine Kulisse (28) eines Beschlagunterteils (7) des Einstellers (5) oder der Sitzbefestigung greift und fest in einer Öffnung eines auf der Lagerbuchse (13) gelagerten, federbelasteten Fangelementes (17) sitzt.

## Claims

1. Vehicle seat, in particular motor vehicle seat, having an adjuster (5) and/or a seat securing means and having an unlocking device (21; 121; 221), by means of which the adjuster (5) or the seat securing means can be unlocked and which has an unlocking element (27; 127; 227) which engages in the adjuster (5) or the seat securing means, **characterised in that** the unlocking element (27; 127; 227) is fitted to a pivotably supported carrier (25; 125; 225) which is arranged on the outer side of the adjuster (5) or the seat securing means.

2. Vehicle seat according to claim 1, **characterised in that** the carrier (25) has a single arm having the unlocking element (27) and having an actuation finger (29).

3. Vehicle seat according to claim 1, **characterised in that** the carrier (125) is in the form of a plate having a plurality of possible fitting means for actuation elements (129) and/or the unlocking element (127).

4. Vehicle seat according to claim 1, **characterised in that** the carrier (225) can be selected from a set of carriers (225', 225", 225''', 225'''') having a plurality of arms for fitting actuation elements (229).

5. Vehicle seat according to claim 3 or 4, **characterised in that** the carrier (125; 225) is constructed for variably selectable angles between the effective directions of the actuation elements (129; 229).

6. Vehicle seat according to any one of claims 1 to 5, **characterised in that** the unlocking device (21; 121; 221) can be actuated manually.

7. Vehicle seat according to any one of claims 1 to 6, **characterised in that** a bearing pin (23) is provided on the carrier (25) in order to support the carrier (25), the bearing pin (23) being axially secured by a circular or oval securing ring (26).

8. Vehicle seat according to any one of claims 1 to 6, **characterised in that** a bearing sleeve (123; 223) is provided on the carrier (125; 225) in order to support the carrier (125; 225) and is axially secured by a clip type connection.

9. Vehicle seat according to any one of claims 1 to 8, **characterised in that** the carrier (25; 125; 225) is supported at a bearing bushing (13) of the adjuster (5) or the seat securing means, which preferably serves simultaneously to support one or more securing elements (17) which are to be moved by the unlocking element (27; 127; 227).

10. Vehicle seat according to claim 9, **characterised in that** the unlocking element (27; 127; 227) engages through a slot (28) of a lower fitting member (7) of the adjuster (5) or the seat securing means and is arranged securely in an opening of a resiliently loaded catch element (17) which is supported on the bearing bushing (13).

## Revendications

1. Siège de véhicule, en particulier siège de véhicule automobile, comportant un dispositif de réglage (5) et/ou une fixation de siège et comportant un dispositif de déverrouillage (21 ; 121 ; 221), au moyen duquel le dispositif de réglage (5) ou la fixation de siège est déverrouillable, et qui présente un élément de déverrouillage (27 ; 127 ; 227) s'engrenant dans le dispositif de réglage (5) ou la fixation de siège, **caractérisé par le fait que** l'élément de déverrouillage (27 ; 127 ; 227) est installé sur un organe d'entraînement (25 ; 125 ; 225) monté à pivotement, disposé sur le côté externe du dispositif de réglage (5) ou de la fixation de siège.

2. Siège de véhicule selon la revendication 1, **caractérisé par le fait que** l'organe d'entraînement (25) présente un seul bras comportant l'élément de déverrouillage (27) et comportant un doigt d'actionnement (29).

3. Siège de véhicule selon la revendication 1, **caractérisé par le fait que** l'organe d'entraînement (125) est réalisé sous la forme d'un disque ayant plusieurs possibilités d'installation pour des éléments d'actionnement (129) et/ou l'élément de déverrouillage (127).

4. Siège de véhicule selon la revendication 1, **caractérisé par le fait que** l'organe de commande (225) est sélectionnable à partir d'un jeu d'organes d'entraînement (225', 225", 225''', 225'''') comportant plusieurs bras pour l'installation d'éléments d'actionnement (229).

5. Siège de véhicule selon l'une des revendications 3 ou 4, **caractérisé par le fait que** l'organe d'entraînement (125 ; 225) est réalisé pour différents angles sélectionnables entre les directions d'action des éléments d'actionnement (129 ; 229).

6. Siège de véhicule selon l'une des revendications 1 à 5, **caractérisé par le fait que** le dispositif de déverrouillage (21 ; 121 ; 221) est actionnable mannuellement.

7. Siège de véhicule selon l'une des revendications 1 à 6, **caractérisé par le fait que**, pour le montage de l'organe d'entraînement (25), un axe de palier (23) est disposé sur l'organe d'entraînement (25), à l'occasion de quoi l'axe de palier (23) est assuré axialement par une bague de sécurité (26) en anneau de cercle ou ovale.

8. Siège de véhicule selon l'une des revendications 1 à 6, **caractérisé par le fait que**, pour le montage de l'organe d'entraînement (125 ; 225), une douille de palier (123, 223) est disposée sur l'organe d'entraînement (125 ; 225), laquelle est assurée axialement par une liaison par clipsage.

9. Siège de véhicule selon l'une des revendications 1 à 8, **caractérisé par le fait que** l'organe d'entraînement (25 ; 125 ; 225) est monté dans une douille de palier (13) du dispositif de réglage (5) ou de la fixation de siège, laquelle sert de préférence simultanément au montage d'un ou plusieurs éléments d'arrêt (17) à déplacer par l'élément de déverrouillage (27 ; 127 ; 227).

10. Siège de véhicule selon la revendication 9, **caractérisé par le fait que** l'élément de déverrouillage (27 ; 127 ; 227) pénètre à travers une coulisse (28) d'une partie inférieure d'armature (7) du dispositif de réglage (5) ou la fixation de siège et est fixé solidement dans une ouverture d'un élément d'arrêt (17) chargé par ressort, monté sur la douille de palier (13).
